# EUROPEAN PATENT APPLICATION

(11) **EP 1 905 871 A1**
(43) Date of publication of application: **02.04.2008**
(21) Application number: 07253736.8
(22) Date of filing: 21.09.2007
(51) Int. Cl.: C25D 3/52, C25D 3/56, B01D 71/02, C01B 3/50

(54) **Plating solution of palladium alloy and method for plating using the same**

(30) Priority: 26.09.2006 JP 2006260829
(71) Applicant: Tanaka Kikinzoku Kogyo K.K., Tokyo 100-6422 (JP)
(72) Inventor: Ishikawa, Tomoko c/o Tanaka Kikinzoku Kogyo K.K. Technical Center, Kanagawa 254-0076 (JP); Kitada, Katsutsugu c/o Tanaka Kikinzoku K.K. Technical Center, Kanagawa 254-0076 (JP)
(74) Representative: Setna, Rohan P.

(57) **Abstract**

The present invention relates to a plating solution of palladium alloy and has an object to provide a plating solution of palladium alloy highly stable and capable of stably forming a plated film of a given alloy composition.

The present invention relates to a plating solution of palladium alloy containing a palladium complex and a metal salt, wherein the palladium complex is coordinated with at least one neutral amino acid selected from the group consisting of glycine, alanine, valine, leucine, serine, threonine, asparagine, glutamine and tyrosine as a ligand.

## Description

### BACKGROUND OF THE INVENTION

### FIELD OF THE INVENTION

The present invention relates to a plating solution of palladium alloy and a method for plating using the same.

### DESCRIPTION OF THE RELATED ART

A plated palladium alloy has been used for dental and decorative purposes, catalysts, electrical contacts, and so forth. It is also used for hydrogen separation membranes, because it selectively absorbs hydrogen and allows it to permeate. It is known that when used for a hydrogen separation membrane, palladium alone tends to suffer hydrogen embrittlement, and is alloyed with Ag, Au or Cu to improve durability while keeping hydrogen permeation capacity for plating.

U. S. Patent No. 4,048,023 discloses a plating solution of Pd-Au alloy comprising an amine-containing palladium chloride and a gold salt of sulfurous acid. Japanese Patent Laid-Open No. 2005-256129 discloses a plating solution of Pd-Ag alloy which contains palladium and silver ions and at least one of nitrate and sulfate ions, and is adjusted for its pH level with ammonia. Japanese Patent Laid-Open No. 2000-303199 discloses a plating solution of Pd-Cu alloy which contains a soluble palladium salt, a soluble copper salt, an electroconductive compound, a compound containing a pyridine ring and a soluble semi-metallic compound.

The plating solution containing ammonia, e.g., that disclosed by U. S. Patent No. 4,048,023 or Japanese Patent Laid-Open No. 2005-256129, tends to be difficult to keep its pH level because of evaporation of ammonia or the like during the plating work. Palladium or the like may separate out when the plating solution has an unstable pH level, tending to vary the alloy composition in the plated film.

The plating solution disclosed by Japanese Patent Laid-Open No. 2005-256129 may cause evolution of explosive fulminating silver by the reactions of ammonia with the nitrate or silver ions. The plating solution disclosed by Japanese Patent Laid-Open No. 2000-303199, which contains selenium or the like as a soluble semi-metal, may show toxicity to deteriorate working environments for plating.

As discussed above, the plating solutions of palladium alloy disclosed by the patent documents are difficult to satisfy all of the suitable solution conditions, because they may cause problems, e.g., unstable solution conditions to separate the component(s), difficulty in forming a plated film at a stable eutectoid rate, uneven plated film surfaces, or deteriorated plating environments.

It is an object of the present invention to provide a plating solution of palladium alloy highly stable and capable of stably forming a plated film of a predetermined alloy composition.

### SUMMARY OF THE INVENTION

The present invention, which can solve the above problems, relates to a plating solution of palladium alloy containing a palladium complex and a metal salt, wherein the palladium complex is coordinated with at least one neutral amino acid selected from the group consisting of glycine, alanine, valine, leucine, serine, threonine, asparagine, glutamine and tyrosine as a ligand.

In the plating solution of the present invention, the neutral amino acid as a ligand for the palladium complex works to suppress variation of pH level of the plating solution, controlling separation of precipitate or the like. It is therefore possible to deposit a uniform plated film having a constant palladium/metal salt ratio. A uniform plated film has a high mechanical strength and is suitable for hydrogen separation membranes. Moreover, the plating solution has a low environmental load, because of lack of toxic compounds, e.g., cyan.

Generally known neutral acids include, in addition to those described above, cystine, methionine, isoleucine, phenylalanine, tryptophan and so forth. However, those containing sulfur, e.g., cystine and methionine, may give a plated film of uneven exterior appearances. On the other hand, isoleucine, phenylalanine and tryptophan are unsuitable for the present invention, because of their very low solubility in water.

The palladium complex is preferably formed by dispersing, in a solvent, at least one palladium salt selected from the group consisting of palladium chloride, palladium sulfate, palladium nitrate, palladium hydroxide and palladium oxide, and the neutral amino acid described above, because the palladium salt can stably form the palladium complex.

The metal salt to be alloyed with palladium is preferably gold, silver or copper salt. It may be a sulfite, chloride, hydroxide or the like of these metals. More specifically, the gold salt may be at least one the sulfite, chloride and hydroxide. The silver salt may be the nitrate or thiosulfate, and the copper salt may be the sulfate.

The neutral amino acid may be in the form of alkaline metal salt, e.g., sodium or potassium salt. The solvent is preferably water.

The plating solution of palladium alloy of the present invention preferably contains the neutral amino acid, palladium and metal salt each at a following concentration.

The neutral amino acid is preferably present at a concentration of 0.1 to 2.0 mols/L in the plating solution, at which it can forms the complex to stabilize palladium and thereby to suppress precipitation or the like. At below 0.1 mols/L, the complex may not be sufficiently formed. At above 2.0 mols/L, on the other hand, it may not be completely dissolved to separate out the precipitate.

Palladium is preferably present at a concentration of 1 to 30 g/L as Pd. At below 1 g/L, current density may be excessive for the palladium concentration during the plating work, possibly causing local formation of the plated film having rough surfaces. At above 30 g/L, on the other hand, it may not be completely dissolved to separate out the precipitate.

The metal salt is preferably present at a concentration of 0.1 to 30 g/L as the metal. At below 0.1 g/L, it tends to be difficult to give an eutectoid composition with palladium. At above 30 g/L, on the other hand, it may not be completely dissolved to separate out the precipitate.

The plating solution of palladium alloy of the present invention may be incorporated with a stabilizer or a buffering agent, in addition to the palladium complex and the metal salt.

The stabilizer is preferably at least one species selected from sodium sulfite, potassium sulfite and ammonium sulfite to give a plating solution of high stability. It is preferably present at a concentration of 1 to 200 g/L in the plating solution. At below 1 g/L, it tends to be difficult to sufficiently stabilize the plating solution. At above 200 g/L, on the other hand, it may not be completely dissolved to separate out the precipitate.

The buffering agent is preferably at least one species selected from inorganic salts, e.g., phosphate, borate, carbonate and so forth, and organic carboxylic acids, e.g., lactic acid, citric acid, malonic acid, malic acid and so forth. A buffering agent works to stabilize a pH level of the plating solution, and hence stabilize the plating solution. The buffering agent is preferably present at a concentration of 0.1 to 200 g/L in the plating solution. At below 1 g/L, it tends to exhibit an insufficient effect of stably keeping the pH level. At above 200 g/L, on the other hand, it may not be completely dissolved to separate out the precipitate.

A plating method with the plating solution of palladium alloy of the present invention is preferably carried out under the conditions of pH: 6 to 10, temperature: 30 to 80°C and current density: 0.1 to 7.0 A/dm². At a pH below 6, the plated film formed may be cracked. At a pH above 10, on the other hand, the plated film tends to have burned surfaces. At a solution temperature lower than 30°C, palladium may not be coprecipitated with the metal. At higher than 80°C, on the other hand, the plating solution tends to be unstable. At a current density below 0.1 A/dm², the precipitate may have uneven exterior appearances. At above 7 A/dm², on the other hand, the precipitate tends to have burned surfaces. The set current density varies depending on plating conditions, e.g., whether the solution is stirred or not.

A plated film formed by the above plating method preferably has a palladium eutectoid rate of 40 to 90% by weight. The film having the rate in the above range will have good hydrogen permeability and durability, when used for a hydrogen permeable membrane. The plated film can have a palladium eutectoid rate of 40 to 90% by weight, when it is formed under the conditions of amino acid concentration in the plating solution: 0.1 to 1.0 mol/L, palladium concentration in the plating solution: 5 to 30 g/L, metal concentration in the metal salt: 0.1 to 30 g/L, solution pH: 6 to 10, temperature: 30 to 80°C, current density: 0.1 to 7.0 A/dm².

The plated film formed by the above plating method is suitable for hydrogen separation membranes, because of its high hydrogen permeability and durability.

As discussed above, the plating solution of palladium alloy of the present invention is highly stable to form a plated film of uniform exterior appearances. It can give a plated film having a palladium eutectoid rate of 40 to 90% by weight, and is suitable for hydrogen separation membranes. The plated film can be also used for decorative purposes.

### DETAILED DESCRIPTION OF THE PREFERRED EMBODIMENTS

Preferred embodiments of the invention are described below.

Examples 1 to 5: these examples used respective neutral amino acids of serine, valine, alanine, glycine and leucine as ligands for palladium complexes. The plating treatment was carried out with plating solution compositions and under conditions shown in Table 1.

**[Table 1]**

| | Solution composition | | Concentration | |
|---|---|---|---|---|
| Example 1 | Palladium salt | Palladium chloride | (Pd concentration) | 10 g/L |
| | Gold salt | Sodium gold sulfite | (Au concentration) | 1 g/L |
| | Neutral amino acid | DL-serine | | 1 mol/L |
| | Stabilizer | Sodium sulfite | | 50 g/L |
| | Buffering agent | Disodium hydrogen phosphate | | 40 g/L 40 g/L |
| | Plating conditions ... pH 9, 60°C, 1 A/dm² | | | |
| Example 2 | Palladium salt | Palladium chloride | (Pd concentration) | 5 g/L |
| | Gold salt | Sodium gold sulfite | (Au concentration) | 1 g/L |
| | Neutral amino acid | DL-valine | | 1 mol/L |
| | Stabilizer | Sodium sulfite | | 50 g/L |
| | Buffering agent | sodium carbonate | | 50 g/L |
| | Plating conditions ... pH 10, 60°C, 1 A/dm² | | | |
| Example | Palladium salt | Palladium chloride | (Pd concentration) | 5 g/L |
| | Gold salt | Sodium gold sulfite | (Au concentration) | 1 g/L |
| | Neutral amino acid | DL-alanine | | 0.5 mol/L |
| | Stabilizer | Sodium sulfite | | 50 g/L |
| | Buffering agent | Disodium hydrogen phosphate | | 50 g/L 50 g/L |
| | Plating conditions ... pH 10, 60°C, 3 A/dm² | | | |
| Example 4 | Palladium salt | Palladium chloride | (Pd concentration) | 10 g/L |
| | Gold salt | Sodium gold sulfite | (Au concentration) | 5 g/L |
| | Neutral amino acid | DL-glycine | | 0.5 mol/L |
| | Stabilizer | Sodium sulfite | | 50 g/L |
| | Buffering agent | Disodium tetraborate + hydrate | | 50 g/L 50 g/L |
| | Plating conditions ... pH 9, 50°C, 1 A/dm² | | | |
| Example 5 | Palladium salt | Palladium sulfate | (Pd concentration) | 5 g/L |
| | Gold salt | Sodium gold sulfite | (Au concentration) | 1 g/L |
| | Neutral amino acid | DL-leucine | | 0.5 mol/L |
| | Stabilizer | Sodium sulfite | | 100 g/L |
| | Buffering agent | Trisodium citrate dihydrate | | 50 g/L |
| | Plating conditions ... pH7.5, 60°C, 1 A/dm² | | | |

### Conventional Example

The plating treatment was carried out using diamine dichloropalladium as a palladium salt with a plating solution composition and under conditions shown in Table 2.

**[Table 2]**

| | Solution composition | | Concentration | |
|---|---|---|---|---|
| Conventional Example | Palladium salt | Diamine dichloropalladium | (Pd concentration) | 1.8 g/L |
| | Gold salt | Sodium gold sulfite | (Au concentration) | 10 g/L |
| | | Ammonium sulfate | | 15 g/L |
| | Plating conditions ... pH 8.2, 55°C, 0.5 A/dm² | | | |

Examples 6 and 7: these examples used a silver salt and a copper salt as a metal salt, respectively, and the plating treatment was carried out with plating solution compositions and under conditions shown in Table 3.

**[Table 3]**

| | Solution composition | | Concentration | |
|---|---|---|---|---|
| Example 6 | Palladium salt | Palladium chloride | (Pd concentration) | 10 g/L |
| | Silver salt | Silver nitrate | (Ag concentration) | 0.1 g/L |
| | Neutral amino acid | Asparagine | | 0.5 mol/L |
| | Stabilizer | Sodium thiosulfate | | 50 g/L |
| | Buffering agent | Dipotassium hydrogen phosphate | | 50 g/L |
| | Plating conditions ... pH 7.0, 60°C, 1 A/dm² | | | |
| Example 7 | Palladium salt | Palladium chloride | (Pd concentration) | 10 g/L |
| | Copper salt | Copper nitrate | (Cu concentration) | 1.0 g/L |
| | Neutral amino acid | Asparagine | | 0.5 mol/L |
| | Stabilizer | Dipotassium citrate | | 100 g/L |
| | Buffering agent | Dipotassium hydrogen phosphate | | 50 g/L |
| | Plating conditions ... pH 7.0, 60°C, 1 A/dm² | | | |

On completion of the plating treatment, each of the thin films of alloy formed was visually observed for the external appearance, and analyzed by ICP emission spectroscopy for eutectoid rate (% by weight) of the palladium and metal ions in the plated film dissolved in aqua regalis. The results are given in Tables 4 and 5.

**[Table 4]**

| | External Appearance* | Eutectoid rate (% by weight) | |
|---|---|---|---|
| | | Pd | Au |
| Example 1 | ○ | 75 | 25 |
| Example 2 | ○ | 80 | 20 |
| Example 3 | ○ | 90 | 10 |
| Example 4 | ○ | 60 | 40 |
| Example 5 | ○ | 85 | 15 |
| Conventional Example | × | 20 | 80 |

| | | | |
|---|---|---|---|
| * ○: Uniform, good external appearances, × : Irregularities observed on the surface | | | |

As shown in Table 4, the alloy film formed in each of Examples 1 to 5 had good quality with uniform external appearances. For a palladium eutectoid rate in the plated film, it was within a range from 40 to 90% by weight to give the excellent Pd-Au alloy film. On the other hand, the plating solution used in Comparative Example evolved precipitates during the plating work, and gave the uneven plated film with surface irregularities. Moreover, the plated film had a palladium eutectoid rate of 20% by weight.

**[Table 5]**

| | External Appearance* | Eutectoid rate (% by weight) | |
|---|---|---|---|
| | | Pd | Ag or Cu |
| Example 6 | ○ | 80 | 20 |
| Example 7 | ○ | 60 | 40 |

| | | | |
|---|---|---|---|
| * ○: Uniform, good external appearances, X: Irregularities observed on the surface | | | |

As shown in Table 5, the alloy film formed in each of Examples 6 and 7 which used a silver nitrate and a copper nitrate as a metal salt, respectively, had good quality with uniform external appearances. For a palladium eutectoid rate, it was within a range from 40 to 90% by weight to give the excellent Pd-Ag or Pd-Cu alloy film.

## Claims

1. A plating solution of palladium alloy containing a palladium complex and a metal salt, wherein the palladium complex is coordinated with at least one neutral amino acid selected from the group consisting of glycine, alanine, valine, leucine, serine, threonine, asparagine, glutamine and tyrosine as a ligand.

2. The plating solution of palladium alloy according to claim 1, wherein the palladium complex is formed by dispersing, in a solvent, at least one palladium salt selected from the group consisting of palladium chloride, palladium sulfate, palladium nitrate, palladium hydroxide and palladium oxide, and the neutral amino acid.

3. The plating solution of palladium alloy according to claim 1 or 2, wherein the metal salt is one of gold salt, silver salt and copper salt.

4. The plating solution of palladium alloy according to any of claims 1 to 3, wherein the neutral amino acid is present at 0.1 to 2.0 mol/L.

5. The plating solution of palladium alloy according to any of claims 1 to 4, wherein palladium is present at a concentration of 1 to 30 g/L as Pd.

6. The plating solution of palladium alloy according to any of claims 1 to 5, wherein the metal salt is present at a concentration of 0.1 to 30 g/L as the metal.

7. A palladium alloy plating method with the plating solution of palladium alloy according to any of claims 1 to 6, carried out under the conditions of pH: 6 to 10, temperature: 30 to 80°C and current density: 0.1 to 7.0 A/dm².

8. A hydrogen separation membrane produced by the palladium alloy plating method according to claim 7.
